(19) Europäisches Patentamt
European Patent Office
Office européen des brevets

(11) Veröffentlichungsnummer: **0 014 458**
**A1**

(12) **EUROPÄISCHE PATENTANMELDUNG**

(21) Anmeldenummer: 80100562.0

(22) Anmeldetag: 04.02.80

(51) Int. Cl.³: C 09 B 67/22
C 09 B 67/20, C 09 B 69/00

(30) Priorität: 10.02.79 DE 2905114

(43) Veröffentlichungstag der Anmeldung: 20.08.80 Patentblatt 80/17

(84) Benannte Vertragsstaaten: AT BE CH DE FR GB IT LU NL SE

(71) Anmelder: BASF Aktiengesellschaft
Carl-Bosch-Strasse 38
D-6700 Ludwigshafen(DE)

(72) Erfinder: Kranz, Joachim, Dr.
Rheinrugenstrasse 22
D-6700 Ludwigshafen(DE)

(72) Erfinder: Polster, Rudolf, Dr.
Carostrasse 43
D-6710 Frankenthal(DE)

(72) Erfinder: Sappok, Reinhard,Dr.
Langgarten 15
D-6900 Heidelberg(DE)

(72) Erfinder: Wiesenberger, Alois
Buergermeister-Wingerter-Strasse 38
D-6715 Lambsheim(DE)

(54) **Pigmentzubereitungen für Lack- und Druckfarben.**

(57) Pigmentzubereitungen für Lack- und Druckfarben, von Flavanthron-, Pyranthron-, Indanthron-, Indigo-, Chinacridon-, Perylen-3,4,9,10-tetracarbonsäuredianhydrid- und Perylen-3,4,9,10-tetracarbonsäurediimidpigmenten, die als Additive mindestens eine Verbindung der Formel

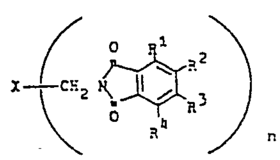

(I),

enthalten, in der X ein n-wertiger Rest eines Flavanthron-, Pyranthron-, Indigo-, Chinacridon-, Perylen-3,4,9,10 tetracarbonsäuredianhydrid- oder -diimidpigmentes ist und
$R^1$, $R^3$ und $R^4$ Wasserstoff oder Chlor,
$R^2$ Wasserstoff, Chlor, Carboxy, Brom, Nitro, N-$C_1$- bis $C_5$-Alkylcarbamoyl, N-Phenylcarbamoyl oder Benzoylamino und
n eine der Zahlen 1, 2, 3 oder 4 bedeuten.

Die Zubereitungen geben in Lösungen von Lackbindemitteln (Lacken) sehr farbstarke Färbungen bei gleichzeitig hohem Flanz und hoher Lasur.

EP 0 014 458 A1

## Pigmentzubereitungen

Die Erfindung betrifft neue Pigmentzubereitungen für Lackfarben.

Die neuen Zubereitungen von Pigmenten auf der Basis Flavanthron, Pyranthron, Indanthron, Indigo, Chinacridon, Perylen-3,4,9,10-tetracarbonsäuredianhydrid und Perylen-3,4,9,10-tetracarbonsäurediimid sind dadurch gekennzeichnet, daß diese mindestens eine Verbindung der allgemeinen Formel

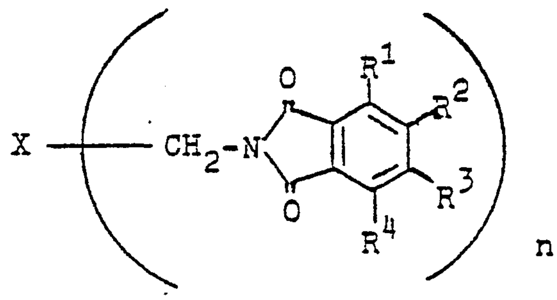

(I)

enthalten, in der X einen n-wertigen Rest eines Flavanthron-, Pyranthron-, Indigo-, Chinacridon-, Perylen-3,4,9,10-tetracarbonsäuredianhydrid- oder diimidpigmentes,

$R^1$, $R^3$ und $R^4$ unabhängig voneinander Wasserstoff oder Chlor,

$R^2$ Wasserstoff, Chlor, Carboxy, Brom, Nitro, N-$C_1$- bis $C_5$-Alkylcarbamoyl, N-Phenyl-carbamoyl oder Benzoylamino und

n eine der Zahlen 1, 2, 3 oder 4 bedeuten.

Die erfindungsgemäßen Zubereitungen geben in Lösungen von Lackbindemitteln sehr farbstarke Färbungen bei gleichzeitig hohem Glanz und hoher Lasur. Der Gehalt an Verbindungen der Formel I - im folgenden auch als Additiv bezeichnet - liegt in der Regel zwischen 0,5 und 15 Gew.-%, bezogen auf das Pigment. Vorzugsweise liegt der Anteil an (I) zwischen 1 und 10, insbesondere zwischen 3 und 6 Gew.-%, bezogen auf

Noe/BL

das Pigment.

In den Zubereitungen gemäß der Erfindung können sich die Additive der Formel I von dem in der Zubereitung vorhandenen Pigment oder von einem anderen Vertreter aus den vorstehend genannten Pigmentklassen ableiten. In jedem Fall tritt durch das Additiv eine Verbesserung des Glanzes und der Lasur bei der Färbung auf. Jedoch können durch die Additive - wenn diese sich von einem Pigment ableiten, das vom Pigment der Zubereitung chemisch verschieden ist -, die Farbtöne verschoben werden.

Bevorzugt sind daher aus coloristischen Gründen Pigmentzubereitungen, in denen sich das Additiv der Formel I von der in der Zubereitung als Pigment vorliegenden chemischen Verbindung oder von einem Derivat dieses Pigments ableitet.

Die erfindungsgemäßen Zubereitungen können z.B. durch Mahlen der Komponenten in einer Kugelmühle hergestellt werden. Gegenenenfalls folgt dem Mahlen noch eine Formierung des feinteiligen, gemahlenen Rohpigments zur Überführung in eine Pigmentform. Da diese Formierung in vielen Fällen auch beim Einarbeiten in die Lösung der Lackbindemittel erfolgt, ist eine besondere Formierung des gemahlenen, feinteiligen Rohpigments in vielen Fällen nicht erforderlich. Die Zubereitung kann auch in der Formierungsstufe hergestellt werden. Hierbei wird das gemahlene, feinteilige Rohpigment mit der entsprechenden Verbindung (I) gemischt und das in der Mischung enthaltene Mahlgut in üblicher Weise in die Pigmentform überfährt. Man kann die erfindungsgemäße Pigmentzubereitung auch durch Einarbeiten des Pigments und der gewünschten Verbindung (I) in dem Lackbindemittel herstellen. In allen Fällen erzielt man mit der Zubereitung das gleiche gute Ergebnis: farbstarke Färbungen mit hohem Glanz und hoher Lasur.

Als Phthalimidomethylenreste kommen im einzelnen z.B. solche in Betracht, die sich vom Phthalimid, 4-Chlorphthalimid, 4-Bromphthalimid, Tetrachlorphthalimid, 4-Carboxyphthalimid, 4-Benzoylaminophthalimid, 4-N-Butylcarbamoylphthalimid, 4-N-Methylcarbamoylphthalimid, 4-N-Äthylcarbamoylphthalimid, 4-N-Propylcarbamoylphthalimid, 4-Nitrophthalimid und 4-tert.-Butylphthalimid oder Gemischen davon ableiten.

Aus coloristischen und wirtschaftlichen Gründen sind als Verbindungen I solche bevorzugt, deren Phthalimidomethylenrest sich vom nicht weiter substituierten Phthalimid ableiten.

Die Verbindungen der Formel I werden nach an sich bekanntem Verfahren durch Kondensation von $X(H)_n$ mit dem entsprechenden Phthalimid (II) und Paraformaldehyd oder dem entsprechenden N-Methylolphthalimid in Gegenwart eines Kondensationsmittels erhalten. Als Kondensationsmittel ist 80 bis 100 gew.-%ige Schwefelsäure oder bis zu 10 gew.-%iges Oleum bevorzugt. Diese Mittel dienen gleichzeitig auch als Reaktionsmedium. Das Kondensationsprodukt wird dann durch Austragen der schwefelsauren Lösung auf Wasser oder Eis/Wasser gefällt und durch Filtrieren, Neutralwaschen in üblicher Weise isoliert.

Die Erfindung soll durch die folgenden Beispiele weiter erläutert werden. Die im folgenden angegebenen Prozente beziehen sich auf das Gewicht.

V. Die erfindungsgemäßen Pigmentzubereitungen wurden im Einbrennlack coloristisch bewertet. Die dazu erforderlichen Lackierungen wurden in allen Fällen wie folgt hergestellt:

V. 1. Buntlack

5 g Pigmentzubereitung (oder Pigment)

95 g eines Einbrennlacks auf der Basis Alkydharz-Melaminharz (35 %ige Lösung in Xylol) werden in einem 250 ml Polyäthylenbecher gegeben. Nach dem Zugeben von 100 ml Glasperlen (3 mm Ø) wird 1 Stunde auf einem Schüttelgerät (®RED DEVIL) dispergiert. Der Buntlack wird von den Glasperlen abgesiebt.

V. 2. Volltonlack für Volltonfärbungen

5 g Buntlack V.1. werden mit

5 g Klarlack homogen gemischt.

Der Volltonlack V.2. wird mit einer 150 µm Spiralrakel auf Kontrastkarton abgezogen. Die Lackierung wird nach dem Ablüften (20 Minuten) bei 120°C eingebrannt (15 Minuten).

V. 3. Weißverschnittlack

4 g Buntlack V.1. werden mit

12,5 g Weißlack (40 %ig an Titandioxid) homogen gemischt. Der Weißverschnittlack V.3. wird mit einer 150 µm Spiralrakel auf Karton abgezogen und die Lackierung nach dem Ablüften (20 Minuten) bei 120°C eingebrannt (15 Minuten).

VI. Die Bewertung der Färbungen erfolgte

VI.1) im Vollton visuell nach Glanz, Helligkeit und/oder Lasur

VI.2) im Weißverschnitt farbmetrisch nach dem FIAF-Verfahren in der Farbstärke, dem Farbton (T) und der Reinheit (Sättigung) (S) gegen einen Vergleich (L.Gall, Farbe + Lack 75 (1969), Seiten 854 bis 862).

Die Farbstärke wurde als Färbeäquivalent zur Farbstärke des Vergleichs = 100 angegeben. Bei den Differenzen im Farbton ($\Delta$ T) und der Reinheit ($\Delta$ S) sind Differenzen von 0,04 deutlich visuell erkennbar.

Die zur Herstellung der erfindungsgemäßen Pigmentzubereitungen verwendeten Verbindungen der Formel I wurden wie folgt hergestellt:

Beispiel A

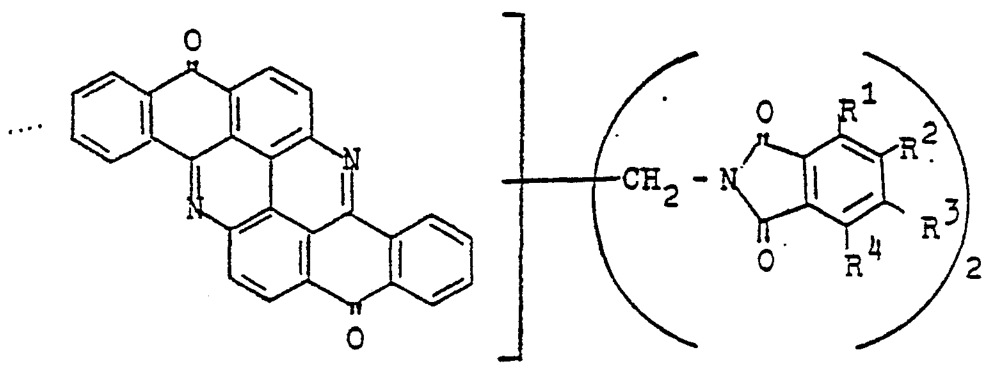

(III)

A1) III $R^1$, $R^2$, $R^3$ und $R^4$ = H

Eine Mischung aus 204 g (= 0,5 Mol) Flavanthron, 33 g Paraformaldehyd und 155 g Phthalimid werden in 1800 g 6 %iges Oleum eingetragen und 6 Stunden bei 90°C gerührt. Dann wird auf Eis-Wasser ausgetragen und das Produkt isoliert. Ausbeute: 340 g (entspr. 94 % der Theorie) eines gelbbraunen bis orangefarbenen Pulvers.

A2) III $R^1$, $R^3$ und $R^4$ = H; $R^2$ = -Cl

Ein Gemisch aus 41 g (= 0,1 Mol) Flavanthron, 7 g Paraformaldehyd und 37 g 4-Chlorphthalimid werden 600 g 98 %ige Schwefelsäure eingetragen und das Gemisch 5 Stunden bei 80°C gehalten. Dann wird in Eiswasser gegossen und das Produkt in üblicher Weise isoliert.
Ausbeute: 73 g ockerfarbenes Pulver.

A3) III $R^2$ = -COOH; $R^1$, $R^3$ und $R^4$ = H

Man verfährt wie bei A2), verwendet jedoch 45 g Phthalimidcarbonsäure, Ammoniumsalz

Ausbeute: 74 g ockerfarbenes Pulver.

A4) III $R^1$, $R^2$, $R^3$ und $R^4$ = Cl

Man verfährt wie bei A2), verwendet jedoch 65 g Tetrachlorphthalimid.

Ausbeute: 95 g ockerfarbenes Pulver.

A5) III $R^2$ = -NH-CO- 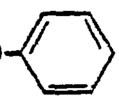 , $R^1$, $R^3$ und $R^4$ = H

Man verfährt wie bei A2), verwendet jedoch 60 g 4-Benzoylaminophthalimid.

Ausbeute: 90 g orange-gelbes Pulver.

Versuch B

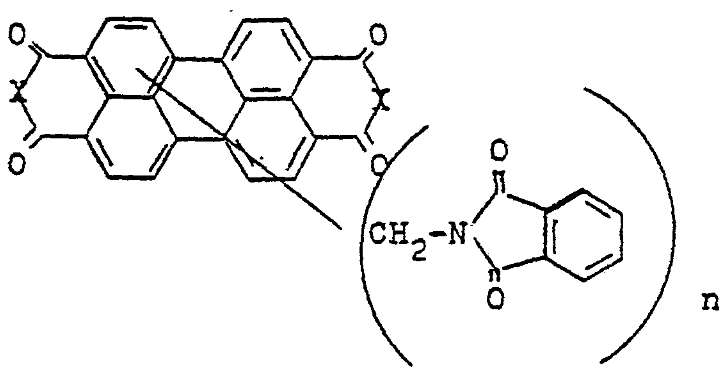

(IV)

B1) IV X = -O-; n = 4

Ein Gemisch aus 40 g Perylen-3,4,9,10-tetracarbonsäureanhydrid und 72 g N-Methylolphthalimid (Molverhältnis ca. 1:4) wird in 720 g 6 %iges Oleum eingetragen und das Reaktionsgemisch 4 Stunden bei 100°C gehalten. Dann wird durch Austragen auf Eiswasser gefällt und das Kondensationsprodukt in üblicher Weise isoliert.

Ausbeute: 102 g rotbraunes Pulver ≙ 99 % der Theorie

B2) IV X = >N-H; n = 4

In 1000 g 100 %ige Schwefelsäure (Monohydrat) werden 78 g Perylentetracarbonsäurediimid, 24 g Paraformaldehyd und 118 g Phthalimid (je 0,8 Mol) eingetragen und die Kondensation bei 60°C zuende geführt (Dauer: 4 Stunden). Dann wird wie bei B1) angegeben aufgearbeitet.
Ausbeute: 199g rotbraunes Pulver (≙ 97 % der Theorie).

B3) IV X = N-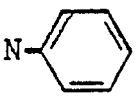-$OC_2H_5$; n = 3

In eine Lösung von 63 g Perylentetracarbonsäure-bisphenetidid (= 0,1 Mol) in 720 g 96 %iger Schwefelsäure werden 55 g N-Methylolphthalimid (0,3 Mol) gegeben und 4 Stunden bei 60°C gehalten. Nach dem Aufarbeiten entsprechend B1) erhält man 108 g rotbraunes Pulver (≙ 97 % der Theorie).

Versuch C

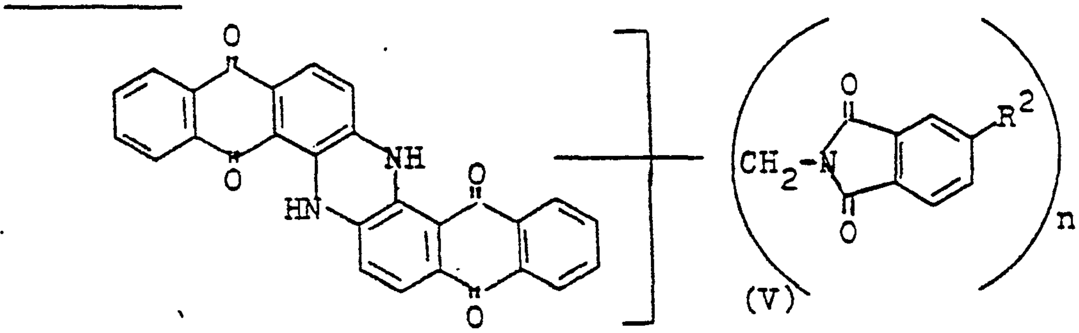

(V)

C1) V $R^2$ = H, n = 4

221 g (0,5 Mol) Indanthron und 360 g (2 Mol) N-Methylolphthalimid werden in 2300 g 3 %iges Oleum eingetragen und 4 Stunden bei 60°C kondensiert. Dann gießt man in Eiswasser und isoliert das Kondensationsprodukt in üblicher Weise.
Ausbeute: 522 g dunkelblaues Pulver (≙ 96 % der Theorie).

C2) V $R^2$ = $-CONH-C_4H_9(n)$; n = 2

Ein Gemisch aus 23 g (0,05 Mol) Indanthron, 6 g Paraformaldehyd und 30 g 4-(Butylcarbamoyl)-phthalimid (je 0,2 Mol) wird in 460 g 3 %iges Oleum eingetragen und 4 Stunden bei 60°C kondensiert. Die Aufarbeitung erfolgt in üblicher Weise.
Ausbeute: 46 g blaues Pulver (≙ 92 % der Theorie).

Beispiel D

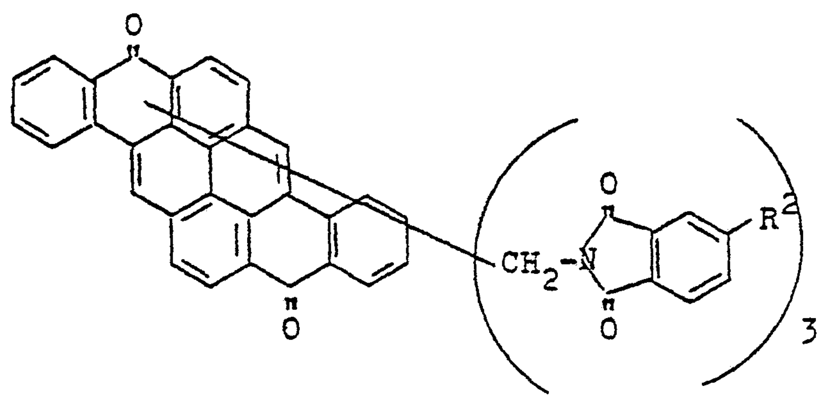

(VI)

D1) VI $R^2$ = H

203 g (0,5 Mol) Pyranthron und 270 g (1,5 Mol) N-Methylolphthalimid werden in 2300 g 3 %iges Oleum eingetragen und 3 Stunden bei 60°C gerührt. Dann wird auf Eiswasser ausgetragen und das Kondensationsprodukt in üblicher Weise isoliert.
Ausbeute: 430 g gelb-braunes Pulver (≙ 97 % der Theorie).

D2) VI $R^2 = -NO_2$

20 g (0,05 Mol) Pyranthron, 6 g Paraformaldehyd und 40 g 4-Nitrophthalimid (je 0,2 Mol) werden in 400 g 3 %iges Oleum eingetragen und bei 60°C kondensiert (3 Stunden). Nach üblicher Aufarbeitung erhält man 45 g eines braunen Pulvers (≙ 88 % der Theorie).

Versuch E

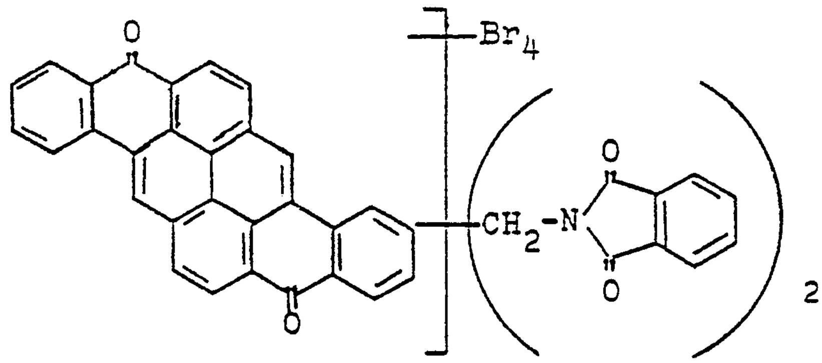

180 g (0,25 Mol) Tetrabrompyranthron und 100 g (0,56 Mol) N-Methylolphthalimid werden in 1000 g 6 %iges Oleum eingetragen und 3 Stunden bei 80°C kondensiert. Dann wird in üblicher Weise aufgearbeitet.
Ausbeute: 250 g rotes Pulver (≙ 96 % der Theorie).

Versuch F

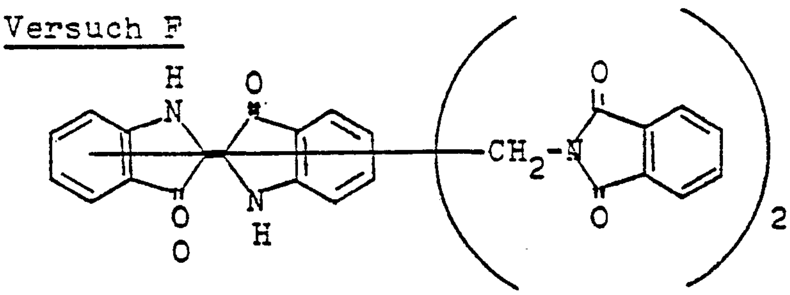

131 g (0,5 Mol) Indigo und 355 g (2,0 Mol) N-Methylolphthalimid werden in 2400 g 96 %ige Schwefelsäure eingetragen und 3 Stunden bei 80°C kondensiert. Die Aufarbeitung erfolgt in üblicher Weise.
Ausbeute: 432 g blaues Pulver (≙ 96 % der Theorie).

Beispiel 1

a) 100 g Flavanthronpigment (erhalten nach dem unter c) beschriebenen Verfahren) und 1 g des nach Beispiel A1) hergestellten Flavanthronderivates (Formel III, $R^1$, $R^2$, $R^3$, $R^4$ = H) wurden trocken homogen gemischt.

b) Mit der Zubereitung wurden nach V.2) und V.3) Vollton- und Weißverschnittlackierungen hergestellt und diese coloristisch mit entsprechenden Färbungen verglichen, die mit dem zur Herstellung der Zubereitung verwendeten Pigments hergestellt worden sind (Vergleich). Die coloristische Beurteilung nach VI.1) und VI.2) ist in der Tabelle 1 zusammengefaßt.

c) Herstellung des Flavanthronpigments
In einer 10 $m^3$ Kugelmühle (Füllung 15,5 t Eisenkugeln, 20 bis 25 mm Ø) wird eine Mischung aus 250 kg rohem Flavanthron, 1500 kg Steinsalz und 7,5 kg Trichlorbenzol 30 Stunden bei ca. 90°C gemahlen. Das Mahlgut wird in Wasser eingetragen und warm filtriert, das Filtergut salzfrei gewaschen, getrocknet und zu Pulver gemahlen.

Beispiele 2 und 3

a) Es wird wie im Beispiel 1a) verfahren, verwendet jedoch zur Herstellung der Zubereitung Yg des nach Beispiel A1) hergestellten Flavanthronderivates. Die Mengen Y sind in der Tabelle 1 angegeben.

b) Mit den Zubereitungen werden nach V.2) und V.3) Lackierungen hergestellt. Die coloristischen Beurteilungen der erhaltenen Färbungen VI.1) und VI.2) sind in der Tabelle 1 zusammengestellt.

Beispiele 4 bis 8

a) Herstellung der Zubereitung
100 g des nach Beispiel 1b) hergestellten Flavanthronpigments und je Y g der in Tabelle 1 angegebenen Flavanthronderivate der Formel III werden homogen gemischt.

b) Mit den Zubereitungen wurden nach V.2) und V.3) Vollton- und Weißverschnittfärbungen hergestellt, die mit Färbungen verglichen wurden, welche mit dem nach Beispiel 1b) erhaltenen Pigment hergestellt wurden. Die coloristische Bewertung (VI.1) und VI.2) ist in der Tabelle 1 zusammengestellt.

Tabelle 1

| Beispiel | Zusatz Y [g] | Zusatz Verbindung Beispiel | Coloristik: Weißverschnittfärbung FK | Weißverschnittfärbung △T | Weißverschnittfärbung △S | Volltonfärbung Ton | Volltonfärbung Lasur |
|---|---|---|---|---|---|---|---|
| Vergleich | 0 | - | 100 | T=2,55 | S = 4,56 | (Vergleich) | (Vergleich) |
| 1 | 1 | A1) | 91 | -0,07 etwas | + 0,01 | Spur dunkler | etwas lasierender |
| 2 | 3 | A1) | 78 | -0,18 | + 0,02 | wenig dunkler | |
| 3 | 5 | A1) | 75 | -0,22 | + 0,02 | dunkler | deutlich lasierender |
| 4 | 7 | A1) | 75 | -0,22 deutlich | + 0,02 | dunkler | deutlich lasierender |
| 5 | 5 | A2) | 71 | -0,25 | + 0,06 | dunkler | deutlich lasierender |
| 6 | 5 | A3) | 74 | -0,25 | + 0,07 | wenig dunkler | deutlich lasierender |
| 7 | 5 | A4) | 84 | -0,13 | + 0,04 | wenig dunkler | deutlich lasierender |
| 8 | 5 | A5) | 96 | -0,04 wenig grüner als Vergleich | + 0,03 | Spur dunkler als Vergleich | wie Vergleich |

Beispiel 9

a) Herstellung der Zubereitung
In einer 2 $m^3$-Kugelmühle werden 300 kg rohes Flavanthron und 15 kg des nach Beispiel A1) hergestellten Flavanthronderivats (Formel III, $R^1$, $R^2$, $R^3$, $R^4$ = H) 25 Stunden gemahlen.

b) Mit dem erhaltenen Mahlgut wurden nach V.2) und V.3) Vollton- und Weißverschnittfärbungen hergestellt. Die Färbungen wurden mit Färbungen verglichen, die mit dem Mahlgut des Beispiels 10c) erhalten wurden. Die coloristische Beurteilung nach VI.1) und VI.2) ist in der Tabelle 2 zusammengestellt.

Beispiel 10

a) Zubereitung: 100 g des nach c) erhaltenen Mahlproduktes und 5 g des nach Beispiel A1) erhaltenen Flavanthronderivates (Formel III, $R^1$, $R^2$, $R^3$, $R^4$ = H) werden homogen gemischt.

b) Mit der erhaltenen Mischung werden gemäß V.2) und V.3) Vollton- und Weißverschnittfärbungen hergestellt und in den coloristischen Eigenschaften mit entsprechenden Färbungen verglichen, die mit dem nach c) erhaltenen Mahlprodukt erhalten werden. Der Vergleich ist in der Tabelle 2 zusammengefaßt.

c) Das bei a) verwendete Mahlprodukt wird durch 25stündiges Mahlen von 300 kg rohem Flavanthron mit 3 to Eisenkugeln (20 bis 25 mm Ø) in einer 2 $m^3$-Kugelmühle erhalten.

Beispiel 11

a) Zubereitung: 100 g des nach Beispiel 10c) erhaltenen gemahlenen Flavanthrons und 5 g des nach Beispiel A1) erhaltenen Flavanthronderivates (III, $R^1$, $R^2$, $R^3$, $R^3$ = H) werden in eine Mischung aus 240 g Butanon-2 und 200 g Wasser eingetragen und die Suspension 5 Stunden bei Siedetemperatur gehalten. Das Butanon wird dann als Azeotrop mit Waser abdestilliert und das Pigment aus der wäßrigen Suspension isoliert und getrocknet.

b) Mit den so erhaltenen Zubereitungen wurden gemäß V.2) und V.3) Vollton- und Weißverschnittfärbungen hergestellt und diese mit Färbungen verglichen, die mit dem nach Beispiel 12c) hergestellten Flavanthronpigment erhalten werden. Der coloristische Vergleich entsprechend VI.1) und VI.2) ist in der Tabelle 2 zusammengestellt.

Beispiel 12

a) Zubereitung: 100 g des nach c) hergestellten Flavanthronpigments und 5 g des nach A1) hergestellten Flavanthronderivats (III, $R^1$, $R^2$, $R^3$, $R^4$ = H) werden homogen gemischt.

b) Mit dieser Zubereitung werden gemäß V.2) und V.3) Vollton- und Weißverschnittfärbungen hergestellt und diese mit Färbungen verglichen, die mit dem nach c) hergestellten Pigment (ohne Zusatz von (I)) erhalten werden. Der Vergleich gemäß VI.1) und VI.2) ist in der Tabelle 2 zusammengefaßt.

c) Flavanthronpigment: 100 g des nach Beispiel 10c) erhaltenen Mahlproduktes werden in ein Gemisch aus 240 g

Butanon-2 und 200 g Wasser eingetragen und die Suspension 5 Stunden bei Siedetemperatur gehalten. Dann wird das Butanon-2 mit Wasser als Azeotrop abdestilliert und das Pigment aus der wäßrigen Suspension isoliert und getrocknet.

Tabelle 2

| Beispiel | Zusatz Y [g] | Zusatz Verbindung Beispiel | Coloristik Weißverschnittfärbung FÄ | Coloristik Weißverschnittfärbung Δ T | Coloristik Weißverschnittfärbung Δ S | Volltonfärbung Ton | Volltonfärbung Lasur |
| --- | --- | --- | --- | --- | --- | --- | --- |
| Vergl. | 0 | - | 100 | T = 2,47 | S = 4,62 | (Vergleich) | |
| 9 | 5 | A1) | 91 | -0,05 | +0,03 | Spur heller | deutlich lasierender |
| 10 | 5 | A1) | 92 | -0,10 | -0,02 | | |
| | | | | | | als Vergleich | |
| Vergl. | 0 | - | 100 | T = 2,60 | S = 4,60 | (Vergleich) | |
| 11 | 5 | A1) | 84 | -0,16 | -0,02 | wenig dunkler | deutlich lasierender |
| 12 | 5 | A1) | 85 | -0,21 | 0,00 | | |
| | | | | | | als Vergleich | |

Beispiel 13

a) Zubereitung: 100 g feinteiliges Perylen-3,4,9,10-tetracarbonsäuredianhydrid (das durch 30stündiges Mahlen in einer Kugelmühle erhalten wurde) und 5 g des nach Beispiel B1) hergestellten Perylenderivates (Formel IV, X = -O-; n = 4) werden in 1000 g 90 %iger Schwefelsäure eingetragen und bei Raumtemperatur gerührt, wobei die Mischung dick wird. Nach 15 Stunden wird die schwefelsaure Mischung in 5000 g Wasser von 50°C ausgetragen und die Suspension filtriert. Das Filtergut wird neutralgewaschen und bei 80°C getrocknet.

b) Mit der so erhaltenen Pigmentzubereitung werden nach V.2) und V.3) Vollton- und Weißverschnittfärbungen hergestellt und diese mit Färbungen verglichen, die mit einem Pigment hergestellt worden sind, welches nach dem unter a) angegebenen Verfahren jedoch in Abwesenheit des Perylenderivates erhalten wird. Die Zubereitung ist in der Volltonfärbung lasierender und im Weißverschnitt im Farbton deutlich gelber und bei gleichzeitig höherer Farbsättigung auch farbstärker. Außerdem ist die nach a) erhaltene Zubereitung leichter dispergierbar.

| | FÄ | T | S | Lasur |
|---|---|---|---|---|
| Vergleich | 100 | 8,91 | 2,99 | (Vergleich) |
| Zuber. a) | 92 | 8,66 | 3,04 | lasierender als Vergl. |

Beispiel 14

a) Zubereitung: 100 g feinteiliges Pigment Red 123; C.I. Nr. 71 145 (erhalten durch 35stündiges Mahlen von rohem Pigment Red 123 in der Kugelmühle in Abwesenheit von Mahlhilfsmitteln) und 6 g des nach Beispiel B3)

erhaltenen Perylenderivates (Formel IV, X = 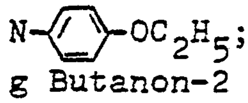; n = 3) werden in eine Mischung aus 240 g Butanon-2 und 200 g Wasser eingetragen und die Suspension 5 Stunden auf Rückflußtemperatur erwärmt. Dann wird das Keton mit Wasser abdestilliert, die wäßrige Suspension filtriert, das Filtergut getrocknet und zu einem Pulver zerkleinert.

b) Mit dieser Zubereitung wurden nach V.2) und V.3) Vollton- und Weißverschnittfärbungen hergestellt. Diese wurden mit Färbungen verglichen, die mit dem nach c) erhaltenen Vergleich erhalten wurden.

| .... | FÄ | T | S | Lasur |
|---|---|---|---|---|
| Vergleich c) | 100 | 8,91 | 3,20 | (Vergleich) |
| erfindungsgem. | 94 | 8,74<br>deutlich gelber als | 3,24<br>etwas reiner als | deutlich lasierender als |

Vergleich

Das gleiche Ergebnis erhält man, wenn man das rohe Pigment Red 123 C.I.Nr. 71 145 mit 6 % des Perylenderivates des Beispiels B3) 35 Stunden in der Kugelmühle mahlt und dann das Mahlgut gemäß a) formiert.

c) Vergleichspigment: 100 g des bei a) verwendeten feinteiligen Pigments Red 123 wurden ohne Zusatz des Perylenderivates wie unter a) angegeben formiert, aufgearbeitet, isoliert und getrocknet.

<u>Beispiel 15</u>

a) Zubereitung: 100 g des nach c) hergestellten C.I.Pigment Brown 26; C.I.Nr.71 129 werden mit 5g des Perylenderivates des Beispiels B2) homogen gemischt.

b) Mit der Zubereitung wurden nach V.2) und V.3) Vollton- und Weißverschnittfärbungen hergestellt. Diese wurden mit Färbungen verglichen, die mit dem Pigment aus c) erhalten wurden.

| | FÄ | T | S | Lasur |
|---|---|---|---|---|
| Vergleich c) | 100 | 11,25 | 2,01 | (Vergleich) |
| erfindungsgemäß | 96 | 11,10 deutlich gelber als | 2,02 wie | deutlich lasierender als |
| | | | Vergleich | |

c) Pigment: In einer 10 $m^3$ Kugelmühle (Füllung 15,5 t Eisenkugeln, Durchmesser 20 bis 25 mm) werden 1100 kg rohes Perylen-3,4,9,10-tetracarbonsäurediimid bei 80°C in Abwesenheit von Salz 30 Stunden gemahlen. Das Mahlgut wird in die 3-fache Gewichtsmenge flüssiges Phenol eingetragen und das Gemisch 3 Stunden bei 180°C gerührt. Durch Zugabe von Natronlauge wird bei 100 bis 80°C das Phenol gelöst, die Pigmentsuspension filtriert. Das Filtergut wird frei von Phenol/Phenolat und Alkalihydroxid gewaschen und getrocknet.

## Beispiel 16

a1) Zubereitung: 100 g des nach c) hergestellten Pigment Blue 60, C.I.Nr. 69 800 und 5 g des nach Beispiel C1) erhaltenen Indanthronderivates werden homogen gemischt.

a2) Zubereitung: 100 g des nach c) hergestellten Pigments und 10 g des nach Beispiel C2) hergestellten Indanthronderivates werden homogen gemischt.

b) Mit der Zubereitung wurden nach V.2) und V.3) Vollton- und Weißverschnittfärbungen hergestellt und diese mit Färbungen des nach c) erhaltenen Pigments (=Vergleich) verglichen.

| | FÄ | T | S | Lasur |
|---|---|---|---|---|
| Vergleich c) | 100 | 16,92 | 3,20 | (Vergleich) |
| Zub. a1) | 96 | 16,97 | 3,28 | |
| Zub. a2) | 87 | 16,95 | 3,29 | lasierender |
| | | etwas grüner als | reiner als Vergleich | als |

c) 100 g feinteiliges rohes Indanthron (erhalten durch 24stündiges Mahlen von rohem Pigment Blue 60 in einer Kugelmühle in Abwesenheit von Mahlhilfsmitteln) werden in eine Mischung aus 240 g Butanon-2 und 200g Wasser eingetragen und die Suspension 5 Stunden auf Rückflußtemperatur erwärmt. Das Keton wird mit Wasser als azeotropes Gemisch abdestilliert und das Pigment aus der wäßrigen Suspension isoliert und getrocknet.

Beispiel 17

a1) Zubereitung: 100 g feinteiliges rohes 6,14-Dichlorpyranthron (hergestellt durch 24stündiges Mahlen von rohem 6,14-Dichlorpyranthron in einer Kugelmühle) und 5 g des nach Beispiel D1) hergestellten Pyranthronderivates werden in 300 g N-Methylpyrrolidon eingetragen und das Gemisch 3 Stunden bei 70°C gerührt. Nach dem Verdünnen mit warmem Wasser wird das Pigment abgetrennt, frei von N-Methylpyrrolidon gewaschen und getrocknet.

a2) Zubereitung: Es wird wie bei a1) verfahren, jedoch werden 5 g des nach Beispiel D2) hergestellten Pyranthronderivates angewendet.

b) Mit den Zubereitungen a1) und a2) wurden nach V.2) und V.3) Vollton- und Weißverschnittfärbungen hergestellt und diese mit Färbungen des nach c) erhaltenen Vergleichspigments verglichen.

| | FÄ | T | S | Lasur |
|---|---|---|---|---|
| Vergleich c) | 100 | 4,48 | 4,24 | (Vergleich) |
| Zub. a1) | 91 | 4,12 | 4,27 | deutlich |
| Zub. a2) | 90 | 4,26 | 4,30 | lasierender |
| | | wesentlich gelber als | als reiner | als |
| | | | Vergleich | |

c) Das Vergleichspigment wurde wie unter a1) angegeben jedoch in Abwesenheit der Verbindung des Beispiels D1) hergestellt.

<u>Beispiel 18</u>

a1) Zubereitung: In einer Kugelmühle wird eine Mischung aus rohem Flavanthron und 5 %, bezogen auf Flavanthron, des nach Beispiel D1) hergestellten Pyranthronderivates in Abwesenheit von Mahlhilfsmitteln 30 Stunden gemahlen.

a2) Zubereitung: 100 g des nach Beispiel 1c) erhaltenen Flavanthronpigments und 5 g des nach Beispiel D1) hergestellten Pyranthronderivates werden homogen gemischt.

b) Mit den Zubereitungen a1) und a2) wurden nach V.2) und V.3) Vollton- und Weißverschnittfärbungen hergestellt und mit solchen verglichen, die mit dem Pigment des Beispiels 1c) erhalten wurden.

| | FÄ | T | S | Lasur |
|---|---|---|---|---|
| Vergleich 1c) | 100 | 2,55 | 4,56 | (Vergleich) |
| Zub. a1) | 89 | 2,45 | 4,52 | deutlich |
| Zub. a2) | 73 | 2,40 | 4,54 | lasierender |
| | | gelber als | wenig trüber als | als |
| | | | Vergleich | |

## Beispiel 19

a1) Zubereitung: 100 g Flavanthronpigment des Beispiels 1c) und 5 g des nach Beispiel D2) hergestellten Pyranthronderivats werden homogen gemischt.

a2) Zubereitung: 100 g Flavanthronpigment des Beispiels 1c) und 5 g des nach Beispiel E hergestellten Pyranthronderivats werden homogen gemischt.

b) Mit den Zubereitungen wurden nach V.2) und V.3) Vollton- und Weißverschnittfärbungen hergestellt und solchen verglichen, die mit dem Pigment des Beispiels 1c) erhalten wurden.

| | FÄ | T | S | Lasur |
|---|---|---|---|---|
| Vergleich 1c) | 100 | 2,55 | 4,56 | (Vergleich) |
| Zub. a1) | 85 | 2,43 | 4,60 | deutlich lasierender als |
| Zub. a2) | 96 | 2,99+ | 4,40 | Vergleich |

+Verschiebung nach Rot wird durch den Zusatz verursacht.

## Beispiel 20

a) Zubereitung: Die Zubereitung wurde wie in Beispiel 17

a1) angegeben hergestellt, jedoch wurden 5 g des nach Beispiel E hergestellten Pyranthronderivats anstelle des Derivates Beispiel D1) verwendet.

b) Mit der Zubereitung wurden nach V.2) und V.3) Vollton- und Weißverschnittfärbungen hergestellt. Diese wurden mit Färbungen des Pigments des Beispiels 17c) verglichen.

| | FÄ | T | S | Lasur |
|---|---|---|---|---|
| Vergleich 17c) | 100 | 4,48 | 4.24 | (Vergleich) |
| Zub. a) | 98 | 4,70+ | 4,06 | deutlich lasierender als Vergleich |

+Verschiebung des Farbtons nach Rot durch den Zusatz D1).

Beispiel 21

a) Zubereitung: 100 g des nach Beispiel 16c) erhaltenen Pigments Blue 60, C.I.Nr. 69 800, und 10 g des nach Beispiel F hergestellten Indigoderivates wurden homogen gemischt.

b) Die Zubereitung wurde nach V.2) und V.3) ausgefärbt und die Färbungen mit solchen des Pigments aus Beispiel 16c) verglichen.

| | FÄ | T | S | Lasur |
|---|---|---|---|---|
| Vergl. 16c) | 100 | 16,92 | 3,20 | (Vergleich) |
| Zub. a) | 96 | 16,99 | 3,24 | lasierender als Vergleich |

Patentansprüche

1. Zubereitungen von Flavanthron-, Pyranthron-, Indanthron-, Indigo-, Chinacridon-, Perylen-3,4,9,10-tetracarbonsäuredianhydrid- und Perylen-3,4,9,10-tetracarbonsäurediimidpigmenten, gekennzeichnet durch einen Gehalt an mindestens einer Verbindung der allgemeinen Formel

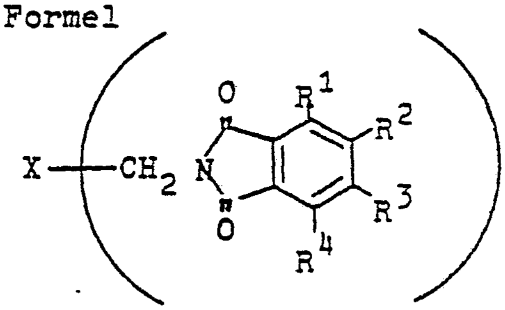

(I),

in der X einen n-wertigen Rest eines Flavanthron-, Pyranthron-, Indigo-, Chinacridon-, Perylen-3,4,9,10-tetracarbonsäuredianhydrid- oder -diimidpigmentes,

$R^1$, $R^3$ und $R^4$ unabhängig voneinander Wasserstoff oder Chlor,

$R^2$ Wasserstoff, Chlor, Carboxy, Brom, Nitro, N-$C_1$- bis $C_5$-Alkylcarbamoyl, N-Phenylcarbamoyl oder Benzoylamino und

n eine der Zahlen 1, 2, 3 oder 4 bedeuten.

2. Zubereitungen gemäß Anspruch 1, dadurch gekennzeichnet, daß diese, bezogen auf das Pigment 0,5 bis 15 Gew.% der Verbindung der Formel I enthält.

3. Zubereitungen gemäß Anspruch 1, dadurch gekennzeichnet, daß diese, bezogen auf das Pigmen, 1 bis 10 Gew.% der Verbindung der Formel I enthält.

4. Zubereitungen gemäß Anspruch 1, 2 oder 3, dadurch gekennzeichnet, daß X sich von der in der Zubereitung

als Pigment vorliegenden chemischen Verbindung oder von einem Derivat dieser Verbindung ableitet.

5. Zubereitung gemäß Anspruch 1, 2, 3 oder 4, <u>dadurch gekennzeichnet</u>, daß sich der Rest

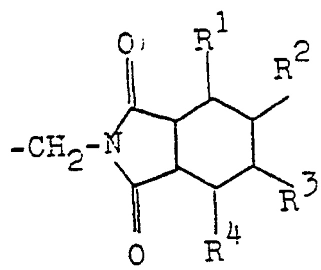

vo vom Phthalimid, 4-Chlorphthalmid, 4-Bromphthalimid, Tetrachlorphthalimid, 4-Carboxyphthalimid, 4-N-Butylcarbamoylphthalimid, 4-N-Methylcarbamoyl- -phthalimid, 4-N-Äthylcarbamoylphthalimid, 4-N-Propylcarbamoylphthalimid, 4-Nitrophthalimid, 4-tert.-Butylphthalinimid oder Gemischen davon ableitet.

6. Pigmentzubereitung gemäß den Ansprüchen 1, 2, 3 oder 4, <u>dadurch gekennzeichnet</u>, daß sich der Rest

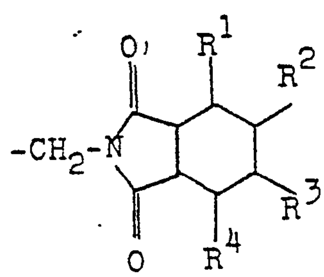

von Phthalimid ableitet.

7. Verwendung der Zubereitungen gemäß den Ansprüchen 1 bis 6 zum Färben von Lack- und Druckfarben.

8. Lack- oder Druckfarbe, dadurch gekennzeichnet, daß diese als Färbemittel Pigmentzubereitungen gemäß den Ansprüchen 1 bis 6 enthalten.

0014458

Europäisches Patentamt

# EUROPÄISCHER RECHERCHENBERICHT

Nummer der Anmeldung
EP 80 10 0562

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int.Cl. 3) |
|---|---|---|---|
| | DE - A - 1 444 274 (ICI)<br>* Seite 2, Zeile 22 bis Seite 5, Zeile 9 *<br>-- | 1 | C 09 B 67/22<br>67/20<br>69/00 |
| | FR - A - 2 282 455 (HOECHST)<br>* Seite 1, Zeile 33 bis Seite 3, Zeile 21 *<br>---- | 1 | |

RECHERCHIERTE SACHGEBIETE (Int. Cl. 3)

C 09 B 67/22
67/20
69/00

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 12-05-1980 | DAUKSCH |